# EUROPÄISCHE PATENTSCHRIFT

(11) **EP 1 841 969 B1**
(45) Veröffentlichungstag und Bekanntmachung des Hinweises auf die Patenterteilung: **04.03.2009**
(21) Anmeldenummer: 06700670.0
(22) Anmeldetag: 17.01.2006
(51) Int. Cl.: F16B 5/02, F16B 25/10

(54) **LASTWAGENAUFBAU MIT EINER BEFESTIGUNG VON BOHLEN, PLATTEN ODER LATTEN AUS HOLZ ODER HOLZWERKSTOFFEN AN EINEM METALLISCHEN UNTERBAU MITTELS SCHRAUBEN**
TRUCK WITH A FASTENING OF BOARDS, PANELS OR SLATS MADE OF WOOD OR OF WOOD MATERIALS TO A METALLIC SUBSTRUCTURE BY MEANS OF SCREWS
POIDS-LOURD AVEC FIXATION DE MADRIERS, PLAQUES OU LATTES EN BOIS OU EN MATIERE A BASE DE BOIS SUR UNE INFRASTRUCTURE METALLIQUE AU MOYEN DE VIS

(30) Priorität: 25.01.2005 DE 102005003472
(43) Veröffentlichungstag der Anmeldung: 10.10.2007
(73) Patentinhaber: SFS intec Holding AG, 9435 Heerbrugg (CH)
(72) Erfinder: PALM, Erich, CH-9434 Au (CH)
(86) Internationale Anmeldenummer: PCT/EP2006/050247
(87) Internationale Veröffentlichungsnummer: WO 2006/079595

(56) Entgegenhaltungen:
- CH-A- 576 081
- DE-A1- 3 208 643
- DE-C1- 4 108 332
- US-A- 6 015 252
- US-A- 6 109 850
- US-A1- 2003 053 885

## Beschreibung

Die Erfindung betrifft einen lastwagenaufbau mit einer Befestigung von Bohlen, Platten oder Latten aus Holz oder Holzwerkstoffen an einem metallischen Unterbaumittels Schrauben, welche aus einem Schraubenkopf und einem zumindest über einen Teil von dessen Länge mit einem Gewinde versehenen Schaft bestehen.

Eine solche Befestigung, die jedoch nicht explizit bei Lastwagenaufbauten auftritt, ist in dem Dokument CH 576 081 beschrieben.

Bei der Befestigung von Bohlen, Platten oder Latten werden in der Regel Schrauben eingesetzt, welche durch die aus Holz oder Holzwerkstoffen bestehenden Bauteile hhdurchgeführt sind und in einen metallischen Unterbau mittels einer Gewindeverbindung eingreifen. Es ist auch bekannt, Durchgangsbohrungen vorzusehen, worauf dann Schrauben und Muttern zur gegenseitigen Befestigung eingesetzt werden. Weiter ist es auch bekannt, Niete für solche Befestigungen zu verwenden. Bei allen diesen Ausführungen sind an der Oberseite oder Außenseite der Bohlen, Platten oder Latten die Schraubenköpfe oder Nietköpfe sichtbar und außerdem besteht gerade bei Schrauben die Gefahr des Lösens, und zwar insbesondere dann, wenn die Befestigung einer Vbration ausgesetzt ist.

Die vorliegende Erfindung hat sich daher zur Aufgabe gestellt einen Lastwagenaufbau mit einer Befestigung der eingangs genannten Art zu schaffen, bei der die Schraubenköpfe an der Außenseite der Bohlen, Platten oder Latten nicht sichtbar sind und welche auch bei ständigen Vbrationen praktisch nicht selbsttätig lösbar ist.

Erfindungsgemäß gelingt dies dadurch, dass jede Schraube von der Seite des metallschen Unterbaues her eingedreht ist und mit ihrem mit einem Gewinde versehenen Schaft in die Bohlen, Platten oder Latten aus Holz oder Holzwerkstoffen eingreift, dass bei der Shraube zwischen dem Schraubenkopf und dem Beginn des Gewindes auf dem Schaft ein im wesentlichen gewindefreier Schaftabschnitt vorgesehen ist, dessen Länge zumindest annähernd der Dicke des von der Schraube zu durchdringenden metallischen Unter-baues entspricht, so dass das Gewinde der Schraube in gesetztem Zustand zur Gänze aus dem metallischen Unterbau herausgeführt ist und ausschließlich in die Bohlen, Platten oder Latten eingreift, und dass der Außendurchmesser des Gewindes größer ausgeführt ist als der Durchmesser einer Zugeordneten im metallischen Unterbau vorbereiteten Bohrung.

Es erfolgt also ein Eindrehen der Schrauben von der Unterseite oder der Rückseite der Konstruktion her. Außerdem ist es besonders vorteilhaft, dass die Schraube durch eine Bohrung in dem metallischen Unterbau eingedreht wird und bei dem Eindrehen sozursagen in einem Gewindeeingriff liegt. Sobald die Schraube aber ganz eingedreht ist, verlässt das Gewinde auf dem Schaft das Gewinde in der Bohrung im metallischen Unterbau, so dass damit eine Losdrehsicherheit gegeben ist. Die Schraube kann sich also nicht mehr zurückdrehen, da das Gewinde nicht mehr in den Gewindegang in der Bohrung im metallischen Unterbau eingeführt werden kann. Es ist somit eine dauerhaft sichere Befestigung geschaffen worden. Dies wirkt sich in besonderem Maße positiv bei der Befestigung von Lastwagenaufbauten auf dem metallischen Unterbau aus.

Es ist gewährleistet, dass selbst bei unebenen Bohlen, Platten oder Latten diese noch gegen den metallischen Unterbau herangezogen werden. Die Schraube kann also im metallischen Unterbau noch soweit überdreht werden, bis die zu verschraubenden Teile satt aneinander anliegen.

Auch wenn gegebenenfalls die Bohrung im metallischen Unterbau vorgefertigt werden muss, wird immer die optimale Befestigung erreicht, wenn das Gewinde der Schraube sowohl im metallischen Unterbau als auch in den Bohlen, Platten oder Latten selbstformend oder-schneidend ausgeführt ist. Es ist also immer ein optimal passender Gewindeeingriff gegeben.

Eine vorteilhafte Ausgestaltung sieht vor, dass der unmittelbar an den Schraubenkopf anschließende Schaftabschnitt der Schraube gewindefrei ausgeführt ist. Dies stellt eine besonders günstige Konstruktionsvariante dar, zumal die Schraube in diesem Abschnitt keinen Eingriff in eine Bohrungswandung haben soll.

Eine Ausführungsvariante sieht vor, dass der Durchmesser des im Wesentlichen gewindefreien Schaftabschnittes kleiner ist als der Außendurchmesser des Gewindes. Dadurch ist auch ein Bewegungsausgleich zwischen den unterschiedlichen miteinander zu verbindenden Materialen Metall und Holz oder Holzwerkstoff möglich. Die Bohrung im metallischen Unterbau umgreift also mit Spiel den gewindefreien Schaftabschnitt.

Eine Möglichkeit sieht in diesem Zusammengang vor, dass der Durchmesser des im Wesentlichen gewindefreien Schaftabschnittes im Wesentlichen dem Kemdurchmesser des Gewindes entspricht. Eine andere Variante sieht vor, dass der Durchmesser des im Wesentlichen gewindefreien Schaftabschnittes kleiner ist als der Kerndurchmesser des Gewindes. Es ist also je nach Bedarf eine Anpassungsmöglichkeit gegeben.

Eine andere Variante sieht vor, dass der gewindefreie oder im Wesentlichen gewindefreie Schaftabschnitt der Schraube von der Unterseite des Schraubenkopfes ausgehend zum Beginn des Gewindes hin sich konisch verjüngt. Es kann dadurch eine Zertrierung des Schaftes der Schraube in der Bohrung im metallischen Unterbau erfolgen, indem dieser Schaftabschnitt im Bereich unter dem Schraubenkopf an der Bohrungswandung anliegt.

Eine Möglichkeit sieht ferner vor, dass am einen Ende der Schraube eine Bohrspitze ausgebildet ist. Bei speziellen Materialien des metallischen Unterbaues und auch der Bohlen, Platten oder Latten könnte dadurch ein Vorbohren unterbleiben, da mit der Schraube selbst die Löcher gebohrt und das Gewinde geschnitten werden kann.

Eine weitere Ausführungsvariante sieht vor, dass das Gewinde auf dem Schaft der Schraube zwei- oder mehrgängig ausgeführt ist. Dadurch wäre ein schnelleres Setzen der Schraube möglich und außerdem ist die Losdrehsicherheit noch erhöht, da dann zwei oder drei winkelmäßig zueinander versetzt angeordnete Gewindegänge ihre Gegengewinde in der Bohrung in dem metallischen Unterbau finden müssten.

Damit ein leichteres Eindrehen der Schraube insbesondere in den Bereich der Bohlen, Platten oder Latten aus Holz oder Holzwerkstoffen ermöglicht werden kann, wird vorgeschlagen, dass zumindest der mit einem Gewinde versehene Abschnitt des Schaftes der Schraube mit einem gleitenden Schmiermittel beschichtet ist.

Eine Ausführungsform sieht vor, dass der Schraubenkopf der Schraube doppelkegelstumpfförmig oder linsenförmig ausgebildet ist. Es ist damit nur ein relativ kleiner Auflagebereich des Schraubenkopfes auf dem metallischen Unterbau gegeben, so dass leichter ein Bewegungsausgleich möglich ist.

Bei einer vorteilhaften Ausbildung wird vorgeschlagen, dass die Bohrung im metallschen Unterbau vorgefertigt ist. Es ist damit ein schnelles und auch einfaches Setzen der Schraube möglich.

In montagemäßiger Hinsicht ergibt sich noch eine Verbesserung dann, wenn ein Loch für die Aufnahme des Schaftes der Schraube in den Bohlen, Platten oder Latten vorgebohrt ist. Das Eindrehmoment kann dadurch noch wesentlich verringert werden, was insbesondere bei einem Einsatz in besonders harten Holzwerkstoffen vorteilhaft ist.

In diesem Zusammengang ist es vorteilhaft, wenn der Durchmesser des vorgebohrten Loches in den Bohlen, Platten oder Latten im Wesentlichen dem Kemdurchmesser des mit einem Gewinde versehenen Schaftes der Schraube entspricht.

Weitere erfindungsgemäße Merkmale und besondere Vorteile werden in der nachstehenden Beschreibung anhand der Zeichnung näher erläutert. Es zeigen:
- Fig. 1: einen Schnitt durch einen metallischen Unterbau und eine mit diesem zu ver- bindende Bohle, Platte oder Latte, wobei die Verbindung mittels einer Schrau- be erfolgt;
- Fig. 2: einen Schnitt wie in Fig.1, wobei jedoch eine andere Schraube eingesetzt ist.

Die Befestigung von Bohlen, Platten 1 oder Latten aus Holz oder Holzwerkstoffen an einem metallischen Unterbau erfolgt hier mittels Schrauben 3, welche aus einem Schraubenkopf 4 und einem zumindest über einen Teil dessen Länge mit einem Gewinde 5 versehenen Schaft 6 bestehen. Eine solche Befestigung kann bei Lastwagen aufbauten überall dort eingesetzt werden, wo Bauteile aus Holz oder Holzwerkstoffen mit einem metallischen Unterbau verbunden werden sollen. In besonderer Weise trifft dies bei Ladeflächen von Lastkraftwagen oder Anhängern zu, wo relativ dicke Bohlen oder Platten in der Regel aus harten Holzwerkstoffen (z.B. Plywood, Pressholz, Pressspanplatten) auf dem metallischen Unterbau (Chassis aus Metallträgern) befestigt werden sollen.

Gemäß der Erfindung wird nun die Schraube 3 von der Seite des metallischen Unterbaues 2 her eingedreht ist und greift mit ihrem mit einem Gewinde 5 versehenen Schaft 6 in die Bohlen, Platten 1 oder Latten aus Holz oder Holzwerkstoffen ein. Zwischen dem Schraubenkopf 4 und dem Beginn des Gewindes 5 auf dem Schaft 6 ist ein im wesentlichen gewindefreier Schaftabschnitt 7 vorgesehen, dessen Länge zumindest annähernd der Dicke D des von der Schraube 3 zu durchdringenden metallischen Unterbaues 2 entspricht. Der Außendurchmesser A des Gewindes 5 ist größer ausgeführt als der Durchmesser U einer im metallischen Unterbau 2 vorbereiteten Bohrung 8.

Das Gewinde 5 der Schraube 3 kann sowohl im metallischen Unterbau 2 als auch in den Bohlen, Platten 1 oder Latten selbstformend oder-schneidend ein Gegengewinde formen.

Der unmittelbar an den Schraubenkopf 4 anschließende Schaftabschnitt 7 der Schraube 3 ist vorteilhaft gewindefrei ausgeführt. Es ist aber auch denkbar, hier einen weiteren Gewindeabschnitt vorzusehen mit wesentlich kleinerem Außendurchmesser als der Außendurchmesser A des Gewindes 5. Dieser Schaftabschnitt 7 kann auch eine andere Oberflächenstruktur aufweisen, beispielsweise können achsparallel verlaufendeoder umlaufende Rippen, Rillen, Rändelungen od. dgl. vorgesehen werden.

Vorteilhaft ist der Durchmesser S des im Wesentlichen gewindefreien Schaftabschnittes 7 kleiner ist als der Außendurchmesser A des Gewindes 5. Es ist auch denkbar, dass der Durchmesser S des im Wesentlichen gewindefreien Schaftabschnittes 7 im Wesentlichen dem Kemdurchmesser K des Gewindes 5 entspricht. Bei einer weiteren Variante ist der Durchmesser S des im Wesentlichen gewindefreien Schaftabschnites 7 kleiner als der Kerndurchmesser K des Gewindes 5 ausgeführt.

Bei der in den Zeichnungen dargestellten Ausführungsvariante ist vorgesehen, dass der gewindefreie oder im wesentlichen gewindefreie Schaftabschnitt 7 der Schraube 3 von der Unterseite des Schraubenkopfes 4 ausgehend zum Beginn des Gewindes 5 hin sich konisch verjüngt.

Falls die Bohrungen in der Platte 1 und gegebenenfalls auch im metallischen Unterbau 2 durch die Schraube 3 selbst hergestellt werden sollen, wird am einen Ende der Schraube 3 eine Bohrspitze 9 ausgebildet ist. Dies kann ein Bohrteil oder ein eingesetztes Bohrplättchen sein, wobei gegebenenfalls die Bohrspitze 9 oder der Bohrtel oder das Bohrplättchen aus einem gegenüber dem sonstigen Schraubenkörper anderen Material gefertigt sein kann.

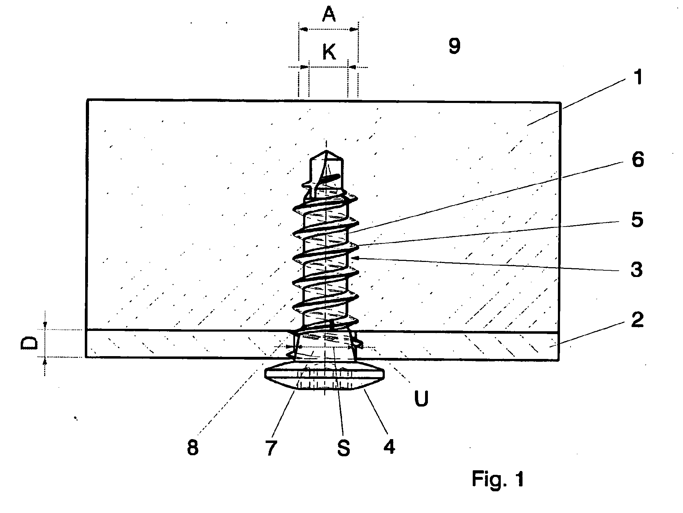

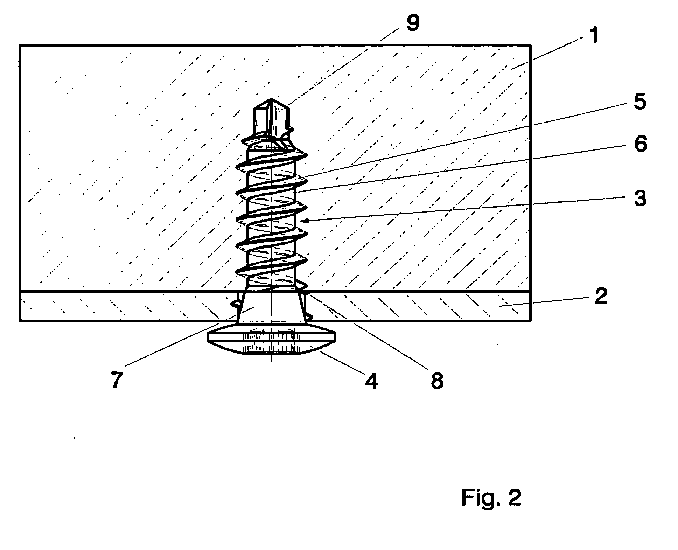

Bei der Ausgestaltung nach Fig. 1 greift der Beginn des Gewindes 5 auch im fertig gesetzten Zustand noch um ein geringes Maß in den metallischen Unterbau 2 ein. Wenn jedoch, wie dies bei der Ausgestaltung nach Fig.2 ersichtlich ist, das Gewinde 5 der Schraube 3 in gesetztem Zustand zur Gänze aus dem metallischen Unterbau 2 herausgeführt ist und ausschließlich in die Bohlen, Platten 1 oder Latten eingreift, dann kann die Schraube 3 noch ein gewisses Maß gegenüber dem Unterbau 2 überdreht und somit noch weiter in die Platte 3 hineingedreht werden, so dass Platten 1 und Unterbau 2 noch fest gegeneinander gepresst werden können.

Gemäß einer Ausführungsvariante könnte noch vorgesehen werden, das Gewinde 5 auf dem Schaft 6 der Schraube 3 zwei- oder mehrgängig auszuführen. Dadurch wäre ein schnelleres Setzen der Schrauben 3 möglich und auch eine noch verbesserte Rückdrehsicherung, zumal alle Gewindeausläufe in die im Unterbau 2 gefertigten Gewindegänge zurückgeführt werden müssten.

Gerade beim Eindrehen in Holz oder Holzwerkstoffe kann das Eindrehmoment für die Schrauben 3 noch dadurch verbessert werden, wenn zumindest der mit einem Gewinde 5 versehene Abschnitt des Schaftes 6 der Schraube 3 mit einem gleitenden Schmiermittel beschichtet ist.

Bei den gezeigten Ausführungsbeispielen ist vorgesehen, den Schraubenkopf 4 der Schraube 3 doppelkegelstumpfförmig oder linsenförmig auszubilden. Im Rahmen der Erfindung kann aber auch jede beliebige andere Form eines Schraubenkopfes eingesetzt werden. So wäre auch ein Mehrkantkopf denkbar z.B. mit einem Außenangriff oder einem Innenangriff. Der Schraubenkopf ist an sich im gesetzten Zustand der Schraube von der Außenseite der Platte od. dgl. nicht mehr sichtbar, so dass eine besonders ästhetische Form nicht erforderlich ist.

Die Bohrung 8 im metallischen Unterbau 2 ist zweckmäßig vorgefertigt. Es ist ferner auch möglich, ein Loch für die Aufnahme des Schaftes 6 der Schraube 3 in den Bohlen, Platten 1 oder Latten vorzubohren. Dabei ist es vorteilhaft, wenn der Durchmesser des vorgebohrten Loches in den Bohlen, Platten 1 oder Latten im Wesentlichen dem Kerndurchmesser K des mit einem Gewinde 5 versehenen Schaftes 6 der Schraube 3 entspricht.

Die vorliegende Erfindung bringt eine optimale Befestigung zwischen Bohlen, Platten 1 oder Latten aus Holz oder Holzwerkstoffen an einem metallischen Unterbau 2, weil eben die Möglichkeit geboten ist, die Befestigung von der Seite des metallischen Unterbaues 2 her zu veranlassen. Es wird eine sichere Befestigung geschaffen, wobei die Befestigung auch bei intensiven Schwingungen oder ständigen Wechselbelastungen nicht selbsttätig lösbar ist.

## Patentansprüche

1. Lastwagenaufbau umfassend einen metallischen Unterbau sowie Bohlen, Platten oder Latten aus Holz oder Holzwerkstoffen sowie eine Befestigungsanordnung zur Befestigung der Bohlen, Platten oder Latten am metallischen Unterbau, wobei die Befestigungsanordnung Schrauben umfaßt welche aus einem Schraubenkopf und einem zumindest über einen Teil von dessen Länge mit einem Gewinde versehenen Schaft bestehen, **dadurch gekennzeichnet, dass** jede Schraube (3) von der Seite des metallischen Unterbaues (2) her eingedreht ist und mit ihrem mit einem Gewinde (5) versehenen Schaft (6) in die Bohlen, Platten (1) oder Latten aus Holz oder Holzwerkstoffen eingreift, dass bei der Schraube (3) zwischen dem Schraubenkopf (4) und dem Beginn des Gewindes (5) auf dem Schaft (6) ein im wesentlichen gewindefreier Schaftabschnitt (7) vorgesehen ist, dessen Länge zumindest annähernd der Dicke (D) des von der Schraube (3) zu durchdringenden metallischen Unterbaues (2) entspricht, so dass das Gewinde (5) der Schraube (3) in gesetztem Zustand zur Gänze aus dem metallischen Unterbau (2) herausgeführt ist und ausschließlich in die Bohlen, Platten (1) oder Latten eingreift und dass der Außendurchmesser (A) des Gewindes (5) größer ausgeführt ist als der Durchmesser (U) einer zugeordneten im metallischen Unterbau (2) vorbereiteten Bohrung (8).

2. Lastwagenaufbau nach Anspruch 1, **dadurch gekennzeichnet, dass** das Gewinde (5) der Schraube (3) sowohl im metallischen Unterbau (2) als auch in den Bohlen, Platten (1) oder Latten selbstformend oder-schneidend ausgeführt ist.

3. Lastwagenaufbau nach Anspruch 1, **dadurch gekennzeichnet, dass** der unmittelbar an den Schraubenkopf (4) anschließende Schaftabschnitt(7) der Schraube (3) gewindefrei ausgeführt ist.

4. Lastwagenaufbau nach Anspruch 1 oder 3, **dadurch gekennzeichnet, dass** der Durchmesser (S) des im Wesentlichen gewindefreien Schaftabschnittes (7) kleiner ist als der Außendurchmesser (A) des Gewindes (5).

5. Lastwagenaufbau nach Anspruch 1 oder 3, **dadurch gekennzeichnet, dass** der Durchmesser (S) des im Wesentlichen gewindefreien Schaftabschnittes (7) im Wesertlichen dem Kemdurchmesser (K) des Gewindes (5) entspricht.

6. Lastwagenaufbau nach Anspruch 1 oder 3, **dadurch gekennzeichnet, dass** der Durchmesser (S) des im Wesentlichen gewindefreien Schaftabschnittes (7) kleiner ist als der Kemdurchmesser (K) des Gewindes (5).

7. Lastwagenaufbau nach einem der Ansprüche 1 bis 6, **dadurch gekennzeichnet, dass** der gewindefreie oder im Wesentlichen gewindefreie Schaftabschnitt (7) der Schraube (3) von der Unterseite des Schraubenkopfes (4) ausgehend zum Beginn des Gewindes (5) hin sich konisch verjüngt.

8. Lastwagenaufbau nach Anspruch 2, **dadurch gekennzeichnet, dass** am einen Ende der Schraube (3) eine Bohrspitze (9) ausgebildet ist.

9. Lastwagenaufbau nach einem der Ansprüche 1 bis 8, **dadurch gekennzeichnet, dass** das Gewinde (5) auf dem Schaft (6) der Schraube (3) zwei- oder mehrgängig ausgeführt ist.

10. Lastwagenaufbau nach einem der Ansprüche 1 bis 9, **dadurch gekennzeichnet, dass** zumindest der mit einem Gewinde (5) versehene Abschnitt des Schaftes (6) der Schraube (3) mit einem gleitenden Schmiermittel beschichtet ist.

11. Lastwagenaufbau nach einem der vorstehenden Ansprüche 1 bis 10, **dadurch gekennzeichnet, dass** der Schraubenkopf (4) der Schraube (3) doppelkegelstumpfförmig oder linsenförmig ausgebildet ist.

12. Lastwagenaufbau nach Anspruch 1, **dadurch gekennzeichnet, dass** die Bohrung (8) im metallischen Unterbau (2) vorgefertigt ist.

13. Lastwagenaufbau nach Anspruch 12, **dadurch gekennzeichnet, dass** ein Loch für die Aufnahme des Schaftes (6) der Schraube (3) in den Bohlen, Platten (1) oder Latten vorgebohrt ist.

14. Lastwagenaufbau nach Anspruch 13 **dadurch gekennzeichnet, dass** der Durchmesser des vorgebohrten Loches in den Bohlen, Platten (1) oder Latten im Wesentlichen dem Kemdurchmesser (K) des mit einem Gewinde (5) versehenen Schaftes (6) der Schraube (3) entspricht.

## Claims

1. A truck body comprising a metal substructure and also planks, boards or battens made of wood or timber materials, as well as a fastening assembly for fastening the planks, boards or battens to a metal substructure, wherein the fastening assembly comprises screws which consist of a screw head and a shank provided with a thread at least over a part of its length, **characterised in that** each screw (3) is screwed in from the side of the metal substructure (2) and with its shank (6) provided with a thread (5) engages into the planks, boards (1) or battens made of wood or timber materials, **in that** between the screw head (4) and the start of the thread (5) the screw (3) is provided with a substantially threadless shank portion (7), the length of which corresponds at least approximately to the thickness (D) of the metal substructure (2) to be penetrated by the screw (3), so that in the set position the thread (5) of the screw (3) is driven fully out of the metal substructure (2) and engages exclusively in the planks, boards (1) or battens, and **in that** the outer diameter (A) of the thread (5) is larger than the diameter (U) of an associated bore (8) provided in the metal substructure (2).

2. A truck body according to Claim 1, **characterised in that** the thread (5) of the screw (3) is designed to be self-forming or self-tapping both in the metal substructure (2) and in the planks, boards (1) or battens.

3. A truck body according to Claim 1, **characterised in that** the shank portion (7) of the screw (3) immediately adjacent the screw head (4) is designed to be threadless.

4. A truck body according to Claim 1 or 3, **characterised in that** the diameter (S) of the substantially threadless shank portion (7) is smaller than the outer diameter (A) of the thread (5).

5. A truck body according to Claim 1 or 3, **characterised in that** the diameter (S) of the substantially threadless shank portion (7) corresponds substantially to the root diameter (K) of the thread (5).

6. A truck body according to Claim 1 or 3, **characterised in that** the diameter (S) of the substantially threadless shank portion (7) is smaller than the root diameter (K) of the thread (5).

7. A truck body according to any one of Claims 1 to 6, **characterised in that** the threadless or substantially threadless shank portion (7) of the screw (3) tapers from the underside of the screw head (4) towards the start of the thread (5).

8. A truck body according to Claim 2, **characterised in that** a drilling tip (9) is formed at one end of the screw (3).

9. A truck body according to any one of Claims 1 to 8, **characterised in that** the thread (5) on the shank (6) of the screw (3) is in the form of a double-start or multistart thread.

10. A truck body according to any one of Claims 1 to 9, **characterised in that** at least the portion of the shank (6) of the screw (3) provided with a thread (5) is coated with a slip lubricant.

11. A truck body according to any one of the preceding Claims 1 to 10, **characterised in that** the screw head (4) of the screw (3) is of double truncated-cone or lenticular shape.

12. A truck body according to Claim 1, **characterised in that** the bore (8) in the metal substructure (2) is preformed.

13. A truck body according to Claim 12, **characterised in that** a hole for receiving the shank (6) of the screw (3) is predrilled in the planks, boards (1) or battens.

14. A truck body according to Claim 13, **characterised in that** the diameter of the predrilled hole in the planks, boards (1) or battens corresponds substantially to the root diameter (K) of the shank (6) of the screw (3) provided with a thread (5).

## Revendications

1. Carrosserie de camion comprenant une infrastructure métallique ainsi que des madriers, plaques ou lattes en bois ou en des matériaux à base de bois, ainsi qu'un dispositif de fixation pour fixer les madriers, plaques ou lattes à l'infrastructure métallique, le dispositif de fixation comprenant des vis ayant une tête de vis et une tige munie d'un filetage sur au moins une partie de sa longueur,
**caractérisée en ce que**
chaque vis (3) est vissée à partir du côté de l'infrastructure métallique (2), et sa tige (6) munie d'un filetage (5) pénètre dans les madriers, plaques ou lattes (1) en bois ou en matériau à base de bois,
la vis (3) comporte entre la tête de vis (4) et le début du filetage (5) sur la tige (6), un segment de tige (7) pratiquement sans filetage dont la longueur correspond au moins sensiblement à l'épaisseur (D) de l'infrastructure métallique (2) traversée par la vis (3) de façon que le filetage (5) de la vis (3) une fois mise en place, soit totalement en dehors de l'infrastructure métallique (2) et pénètre exclusivement dans les madriers, plaques ou lattes (1), et
le diamètre extérieur (A) du filetage (5) est plus grand que le diamètre (U) d'un perçage (8) associé, préparé dans l'infrastructure métallique (2).

2. Carrosserie de camion selon la revendication 1,
**caractérisée en ce que**
le filetage (5) de la vis (3) est autotaraudeur ou autoformeur à la fois dans l'infrastructure métallique (2) et aussi dans les madriers, plaques ou lattes (1).

3. Carrosserie de camion selon la revendication 1,
**caractérisée en ce que**
le segment de tige (7) de la vis (3) directement adjacent à la tête de vis (4) est sans filetage.

4. Carrosserie de camion selon la revendication 1 ou 3,
**caractérisée en ce que**
le diamètre (S) du segment de tige (7) pratiquement sans filetage est inférieur au diamètre extérieur (A) du filetage (5).

5. Carrosserie de camion selon la revendication 1 ou 3,
**caractérisée en ce que**
le diamètre (S) du segment de tige (7) pratiquement sans filetage correspond pour l'essentiel au diamètre primitif (K) du filetage (5).

6. Carrosserie de camion selon la revendication 1 ou 3,
**caractérisée en ce que**
le diamètre (S) du segment de tige (7) pratiquement sans filetage est inférieur au diamètre primitif (K) du filetage (5).

7. Carrosserie de camion selon les revendications 1 à 6,
**caractérisée en ce que**
le segment de tige (7) sans filetage ou pratiquement sans filetage de la vis (3) va en diminuant suivant une forme conique à partir de la face inférieure de la tête de vis (4) en direction du filetage (5).

8. Carrosserie de camion selon la revendication 2,
**caractérisée par**
une pointe perforatrice (9) à l'extrémité de la vis (3).

9. Carrosserie de camion selon les revendications 1 à 8,
**caractérisée en ce que**
le filetage (5) de la tige (6) de la vis (3) est à deux ou plusieurs filets.

10. Carrosserie de camion selon les revendications 1 à 9,
**caractérisée en ce que**
le segment de la tige (6) muni au moins d'un filetage (5) de la vis (3) est revêtu d'un agent lubrifiant.

11. Carrosserie de camion selon les revendications 1 à 10,
**caractérisée en ce que**
la tête (4) de la vis (3) est en forme de double tronc de cône ou en forme de lentille.

12. Carrosserie de camion selon la revendication 1,
**caractérisée en ce que**
le perçage (8) de l'infrastructure métallique (2) est réalisé au préalable.

13. Carrosserie de camion selon la revendication 12,
**caractérisée par**
un préperçage pour recevoir la tige (6) de la vis (3) dans les madriers, plaques ou lattes (1).

14. Carrosserie de camion selon la revendication 13,
**caractérisée en ce que**
le diamètre du préperçage dans les madriers, plaques (1) ou lattes correspond pour l'essentiel au diamètre primitif (K) de la tige (6) de la vis (3) munie d'un filetage (5).
